**Europäisches Patentamt**

**European Patent Office**

**Office européen des brevets**

(19)

(11) Veröffentlichungsnummer: **0 276 366 B1**

# EUROPÄISCHE PATENTSCHRIFT

(12)

(45) Veröffentlichungstag der Patentschrift: **06.11.91**

(21) Anmeldenummer: **87113077.9**

(22) Anmeldetag: **08.09.87**

(51) Int. Cl.⁵: **G01C 21/22**, G09B 29/10, G08G 1/123

(54) **Korrekturverfahren für die Koppelortung von Landfahrzeugen.**

(30) Priorität: **17.12.86 DE 3642986**

(43) Veröffentlichungstag der Anmeldung:
**03.08.88 Patentblatt 88/31**

(45) Bekanntmachung des Hinweises auf die
Patenterteilung:
**06.11.91 Patentblatt 91/45**

(84) Benannte Vertragsstaaten:
**AT BE CH DE ES FR GB GR IT LI LU NL SE**

(56) Entgegenhaltungen:
**EP-A- 0 166 547**
**EP-A- 0 261 404**
**US-A- 3 789 198**

**FUNKSCHAU, Nr. 4, Februar 1985, Seiten 33-36, München, DE; "Verkehrssteuerung: Informieren und leiten - Elektronik hält den Verkehr in Fluss"**

**Bosch Technische Berichte, Bd.8, 1986, Heft 1/2**

(73) Patentinhaber: **ROBERT BOSCH GMBH**
**Postfach 50**
**W-7000 Stuttgart 1(DE)**

(72) Erfinder: **Hankel, Rainer, Dipl. Ing.**
**Rackebüller Weg 75**
**W-1000 Berlin 49(DE)**
Erfinder: **Pham, Minh-Chanh, Dipl. Ing.**
**Schöneberger Ufer 53**
**W-1000 Berlin 30(DE)**
Erfinder: **Raske, Friedrich, Dr.Ing.**
**Bundschuhweg 22**
**W-1000 Berlin 28(DE)**
Erfinder: **Urbanski, Wilfried, Dipl. Ing.**
**Hohenzollernstrasse 4**
**W-1000 Berlin 49(DE)**

(74) Vertreter: **Schmidt, Hans-Ekhardt**
**Robert Bosch GmbH Geschäftsbereich Elektronik Patent- und Lizenzabteilung Forckenbeckstrasse 9-13**
**W-1000 Berlin 33(DE)**

## Beschreibung

### Stand der Technik

Es ist ein Korrekturverfahren für die Koppelortung von Fahrzeugen bekannt (EP 0 261 404 A1, Priorität 25. 09.86, Veröffentlichung 30. 03.88), das jedoch den Nachteil hat, daß eine Korrektur der gemessenen Ortskoordinaten kompliziert und zeitaufwendig ist.

Es ist weiterhin ein derartiges Korrekturverfahren für die Koppelortung von Fahrzeugen bekannt (BOSCH Technische Berichte, Band 8, 1986, Heft 1/2), bei dem einem Stadtplan in Polygondarstellung ein Raster aus Flächenelementen hinterlegt wird. Jedem Flächenelement, das von einem Segment des Stadtplans geschnitten wird, wird ein erster logischer Wert und jedem Flächenelement, das nicht von einem Stadtplan geschnitten wird, wird ein zweiter logischer Wert zugeordnet. Die ermittelten logischen Werte werden in Form einer Matrix in einem Speicher des Fahrzeuges abgelegt. In einem Rechner werden die ermittelten Ortskoordinaten und die Fahrtrichtung der Landfahrzeuge mit in dem Rechner gespeicherten Koordinaten und Richtungen von Straßen verglichen. Werden Abweichungen der ermittelten Werte des Landfahrzeuges festgestellt, dann erfolgt eine Korrektur. Nach welchen Kriterien diese Korrektur im einzelnen vorgenommen wird, ist in der Beschreibung des bekannten Verfahrens nicht erläutert. Es ist auch ein Verfahren zur Überwachung des Standortes von Fahrzeugen bekannt (US-A-3,789,198), bei dem zur Stadtplandarstellung jedem Flächenelement eines in Flächenelemente aufgeteilten Stadtplans der Wert logisch 0 oder logisch 1 zugeordnet ist. Es ist ferner ein Stadtplan in Polygondarstellung bekannt (EP-A2-0 166 547), bei dem der Stadtplan nicht mit einem Raster aus Flächenelementen hinterlegt ist. Weiterhin ist eine Navigationseinrichtung für ein Fahrzeug bekannt (EP-A1-0 261 404), bei dem eine Korrektur in der Weise vorgenomen wird, daß erst bei mehreren aufeinanderfolgenden Abweichwerten diese nacheinander in alle Richtungen verschoben werden, bis sich Flächenelemente ergeben, die den Straßen im Stadtplan angehören.

Sofern bei den bekannten Verfahren eine Korrektur vorgenommen wird, ist dazu immer ein bestimmter Zeitaufwand erforderlich, der nicht unterschritten werden kann.

### Aufgabe

Der Erfindung liegt die Aufgabe zugrunde, das Korrekturverfahren derart weiterzubilden, daß die Korrektur auf einfache und schnelle Weise möglich ist.

### Lösung

Diese Aufgabe wird durch das Korrekturverfahren nach dem Anspruch 1 gelöst. Damit ist nicht nur der Vorteil verbunden, daß der Zugriff zu dem Stadtplanspeicher einfach und schnell ist, weil sich aus den berechneten Ortskoordinaten X und Y direkt die Adresse eines Matrix-Elementes, das heißt eines Flächenelementes des Stadtplans, ableiten läßt. Die Entscheidung, ob und wie die Koordinaten korrigiert werden, hängt nur vom Abfrageergebnis zweier benachbarter Flächenelemente ab, weil auch der jeweilige Winkel der Fahrtrichtung des Landfahrzeuges mitberücksichtigt wird; deshalb wird die Entscheidung sehr schnell getroffen. Auch das Verlassen einer Fahrbahn bzw. das Operieren des Fahrzeuges in einem Gelände ohne öffentliche Straßen sowie der Wiedereintritt in das gespeicherte Straßennetz ist bei der flächenhaften Stadtplanmatrix jederzeit erkennbar.

Durch die in den abhängigen Ansprüchen aufgeführten Maßnahmen sind vorteilhafte Weiterbildungen und Verbesserungen des im Anspruch 1 angegebenen Korrekturverfahrens möglich.

### Beschreibung von Ausführungsbeispielen

Ausführungsbeispiele der Erfindung sind in der Zeichnung an Hand mehrerer Figuren dargestellt und in der nachfolgenden Beschreibung näher erläutert. Die Zeichnung zeigt in

Fig. 1 einen Ausschnitt aus einem normalen Stadtplan (Meßtischblatt),

Fig. 2 einen Ausschnitt nach Fig. 1 in Form eines Graphen (Netzes),

Fig. 3 ein gerastertes und logisch bewertetes Netz,

Fig. 4 und 5 je einen neun Flächenelemente umfassenden Ausschnitt aus Fig. 3 in vergrößertem Maßstab,

Fig. 6 einen neun Flächenelemente umfassenden vergrößerten Ausschnitt aus Fig. 3 zur Erläuterung der verkürzten Prüfung auf den logischen Wert benachbarter Flächenelemente,

Fig. 7 und 8 je einen neun Flächenelemente umfassenden vergrößerten Ausschnitt aus Fig. 3 zur Erläuterung des Unterbleibens einer Korrektur und

Fig. 9 ein gerastertes Netz gemäß Fig. 3 mit zwei unterschiedlichen Flächenelementgrößen.

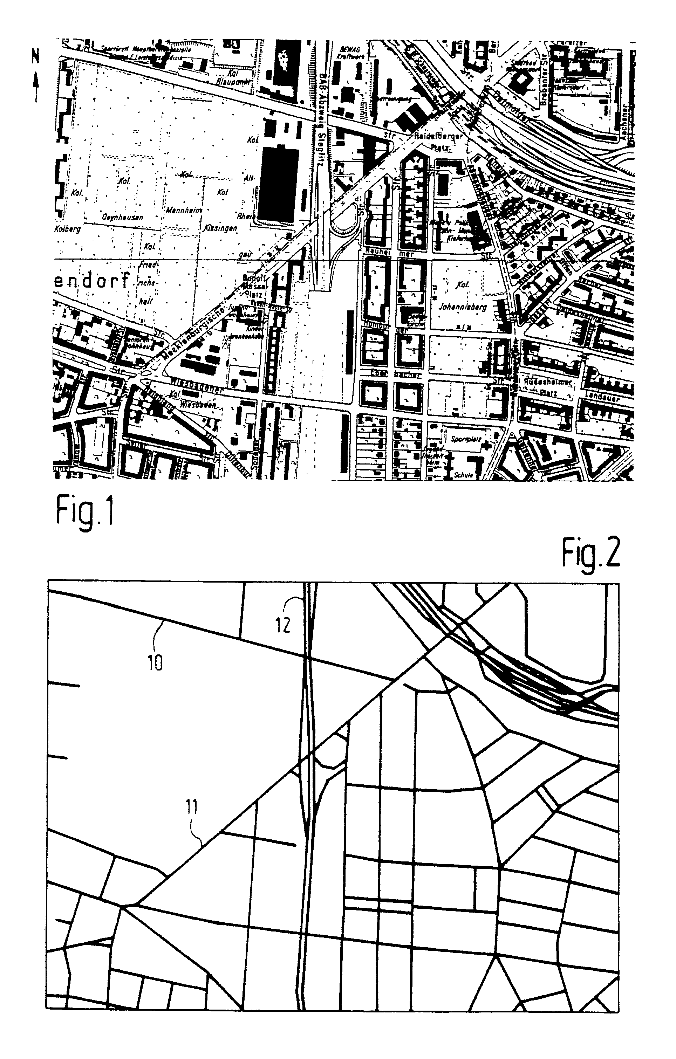

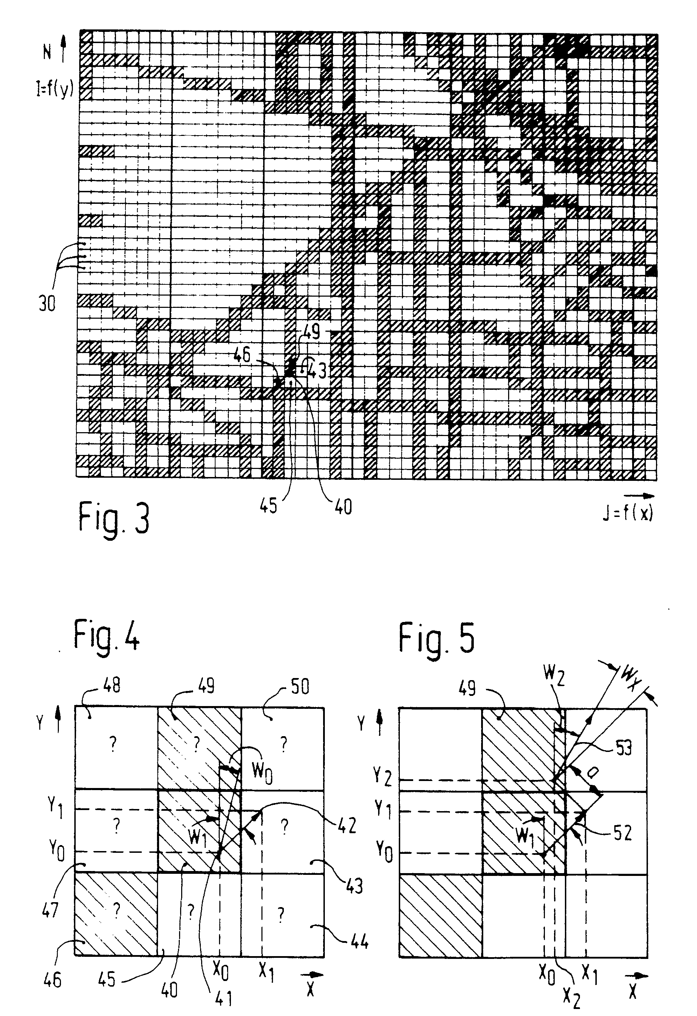

In Fig. 1 ist ein Ausschnitt aus einem normalen, handelsüblichen Stadtplan bzw. Meßtischblatt gezeigt. Aus diesem Stadtplan wird eine Polygondarstellung bzw. ein Graph gemäß Fig. 2 abgeleitet, in welchem die Straßen als Linien 10, 11 und 12 erscheinen. Über den Graphen wird gemäß Fig. 3 ein Raster aus vorzugsweise quadratischen Flächenelementen 30 gelegt. Fig. 3 zeigt nur einen Ausschnitt eines derart aufbereiteten Stadtplans. Allen Flächenelementen, die von einer der Linien 10, 11 und 12, das heißt von Straßen, geschnitten werden, wird ein erster logischer Wert, zum Beispiel "1", zugeordnet; vgl. in Fig. 3 schraffiert dargestellte Flächenelemente. Allen nicht von einer Linie geschnittenen Flächenelementen wird ein zweiter logischer Wert, zum Beispiel "0" zugeordnet; vgl. in Fig. 3 weiß dargestellte Flächenelemente. Die Flächenelemente des Stadtplans in Rasterdarstellung gemäß Fig. 3 werden den Elementen einer Matrix zugeordnet und in dieser Form in einem Speicher abgelegt. Auf diese Weise erhält man eine einfache und für dicht bebaute Stadtgebiete speicherplatzeffiziente Abbildung des Stadtplans.

Die vorstehend beschriebene Art der Darstellung ist eine Voraussetzung für das im folgenden an Hand der Fig. 4 bis 8 beschriebene erfindungsgemäße Korrekturverfahren.

Bei der Koppelortung werden zu Beginn der Fahrt die Startkoordinaten $X_0$ und $Y_0$ sowie der vorzugsweise auf die Nordrichtung bezogene Startwinkel $W_0$ zum Beispiel mittels einer zu dem Rechner des Landfahrzeuges gehörenden Tastatur oder mittels eines an der Fahrbahn aufgestellten ortsfesten Senders in den Rechner des Fahrzeuges eingegeben. Die durch die Bewegung des Fahrzeuges entstehenden Veränderungen von $X_0$, $Y_0$ und $W_0$ werden in der Folge von Weg- und Winkelsensoren des Landfahrzeuges erfaßt. Dabei ergibt sich beispielsweise ein von dem ursprünglichen Winkel $W_0$ abweichender Winkel $W_1$ mit den Koordinaten $X_1$ und $Y_1$. Für den Aufbau und die Funktion derartiger Sensoren gibt es viele Ausführungsbeispiele.

Mit den Werten $X_0$ und $Y_0$ adressiert der Rechner des Fahrzeuges ein bestimmtes Flächenelement 40 (vgl. Fig. 3 und 4) des gerasterten Netzes. Danach stellt der Rechner fest, welchen logischen Wert das Flächenelement 40 hat. Ist das Flächenelement 40 - wie in den Fig. 3 und 4 gezeigt - ein Flächenelement mit dem logischen Wert "1", so ist damit klargestellt, daß sich das Landfahrzeug aufgrund seiner Startkoordinaten auf einer Straße des Stadtplans befindet. Bewegt sich das Fahrzeug nun von dem Startpunkt 41 (Fig. 4) ausgehend, so liefern die Sensoren laufend neue Koordinatenwerte und neue Winkel der Fahrtrichtung. In Fig. 4 ist gezeigt, daß zu einem bestimmten Zeitpunkt nach dem Start des Landfahrzeuges der Rechner neue Koordinaten $X_1$ und $Y_1$ und einen neuen Winkel $W_1$ ermittelt, die Fehler aufweisen. Daraus ergibt sich ein neuer Standort 42 (Fig. 4), der in einem Flächenelement 43 (Fig. 3) liegt, das den logischen Wert "0" hat und demnach nicht zu einer Straße gehört. In diesem Fall prüft der Rechner, ob in den acht, das Flächenelement 40 umgebenden Flächenelementen 43 bis 50 ein Flächenelement mit dem logischen Wert "1" vorhanden ist; vgl. Fragezeichen in Fig. 4. Dies sind nach Fig. 4 die Flächenelemente 46 und 49. Der Rechner stellt an Hand der Ortskoordinaten $X_1$, $Y_1$ fest, daß sich das Fahrzeug von dem Flächenelement 40 in Richtung auf das Flächenelement 43, das heißt in Ost-Richtung, bewegt hat. Daraufhin nimmt der Rechner eine Korrektur in der Weise vor, daß der Endpunkt des Vektors 52 (Fig. 5) um den Abstand a verschoben wird, so daß sich korrigierte Koordinaten $X_2$, $Y_2$ ergeben.

Gleichzeitig wird eine bestimmte Winkelkorrektur um den Winkel $W_x$ in Richtung des Flächenelementes 49 vorgenommen, so daß sich ein neuer, korrigierter Winkel $W_2$ ergibt. Damit liegen neue korrigierte Werte vor, die dem von dem Landfahrzeug tatsächlich eingenommenen Standort weitgehend entsprechen. Solange sich das Fahrzeug innerhalb eines Flächenelementes bewegt, nimmt der Rechner keine Korrektur vor.

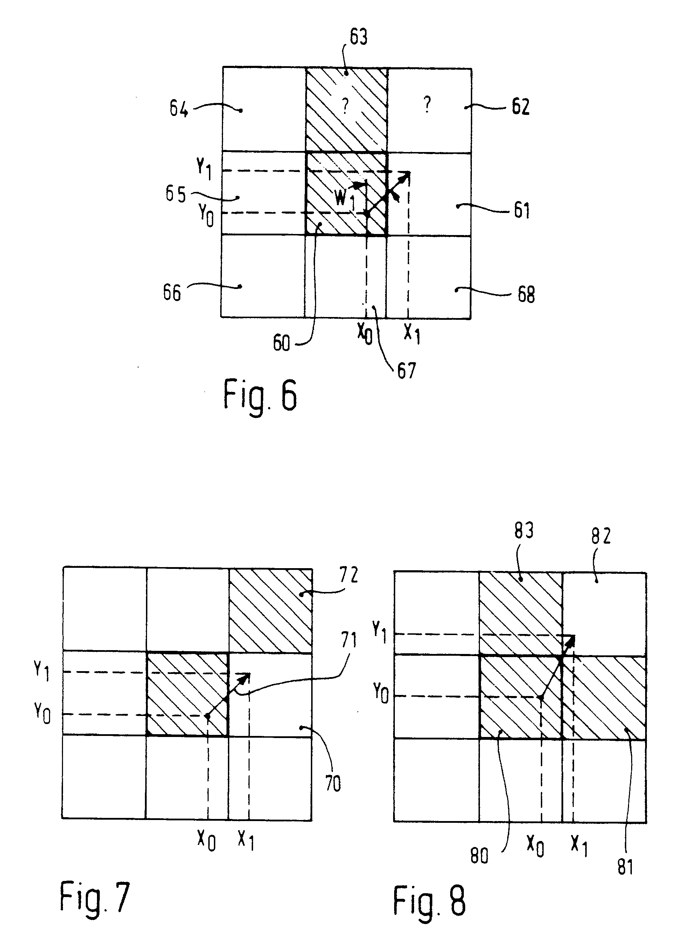

An Hand der Fig. 6 wird ein Korrekturverfahren erläutert, das schneller als das vorstehend beschriebene Verfahren arbeitet, weil das Ermitteln der logischen Werte auf die wesentlichen Flächenelemente beschränkt wird. Zeigen die Ortskoordinaten $X_1$ und $Y_1$ an, daß sich das Landfahrzeug von einem Flächenelement 60 mit dem logischen Wert "1" zu einem Flächenelement 61 mit dem logischen Wert "0" bewegt hat, dann werden nur die in Fahrtrichtung dem Flächenelement 61 unmittelbar benachbarten Flächenelemente, also nur die in Fig. 6 mit einem Fragezeichen versehenen Flächenelemente 62 und 63, berücksichtigt, während die Flächenelemente 64 bis 68 unberücksichtigt bleiben.

In den Fig. 7 und 8 sind Ausführungsbeispiele gezeigt, in denen der Rechner keine Korrektur vornimmt. Nach Fig. 7 liegen die Koordinaten $X_1$ und $Y_1$ zwar innerhalb des Flächenelementes 70 mit dem logischen Wert "0". Die Richtung des Vektors 71 ist jedoch derart, daß das Fahrzeug sich ohnehin in Richtung des nächsten Flächenelementes 72 mit dem logischen Wert "1", das heißt in der richtigen Richtung, bewegt.

Bei der in Fig. 8 gezeigten Konfiguration würde der Rechner ebenfalls keine Korrektur vornehmen, da er im voraus nicht entscheiden kann, ob das Landfahrzeug von dem Flächenelement 80 zu dem Flächenelement 81 oder 83 fahren wird.

In einem weiteren Ausführungsbeispiel besteht das Korrekturverfahren darin, daß in dem Fall, daß die gerade festgestellten Ortskoordinaten des Landfahrzeuges in einem Flächenelement mit dem zweiten logischen Wert liegen, der Rechner aus dem gerasterten Netz (Fig. 3) die Flächenelemente mit dem ersten logischen Wert ausliest, um Informationen über den Fahrbahnverlauf, die Kreuzungen, die Einmündungen, die Straßenbreite oder dergleichen zu ermitteln. An Hand dieser Informationen kann dann der Rechner eine Korrektur der Koordinaten vornehmen.

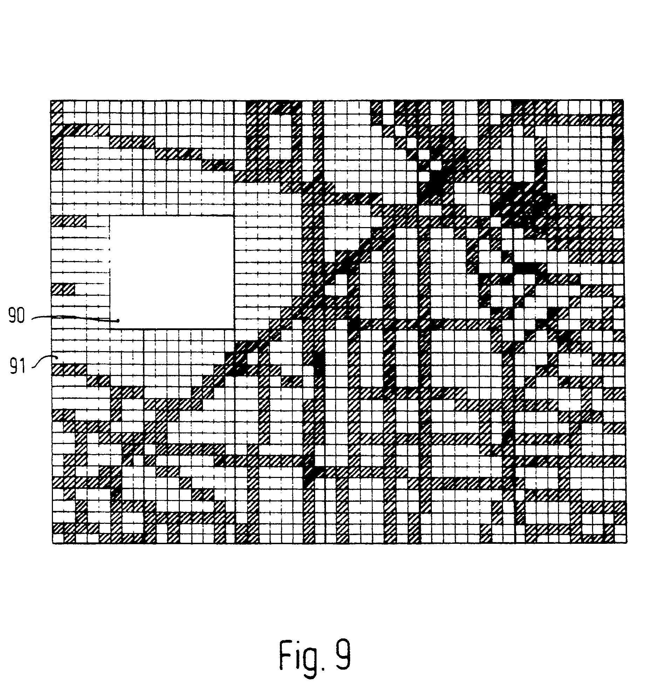

In Fig. 9 ist ein weiteres Ausführungsbeispiel gezeigt, bei dem das Raster für das gerasterte Netz verschiedene Rastergrößen aufweist, und zwar in der Weise, daß Bereiche, in denen keine Straßen vorhanden sind, zum Beispiel Wälder, Seen und dergleichen, eine maximale Rastergröße 90 und Bereiche, in denen eng benachbarte Straßen vorhanden sind, eine minimale Rastergröße 91 aufweisen.

Es kann zu einer Reduzierung des erforderlichen Speicherplatzes kommen, wenn in dem Netz nach Fig. 3 zeilenweise nacheinander die Summen der unmittelbar aneinandergrenzenden Flächenelemente gleichen logischen Wertes gebildet werden. Diese Summen werden dann in dem Speicher hintereinander abgelegt.

Ein einfacher Zugriff zu einem Stadtplan einer flächenmäßig sehr großen Stadt läßt sich dadurch erzielen, daß man den Stadtplan gemäß Fig. 1 in mehrere, sich überlappende Bereiche aufteilt und diese in dem Speicher des Rechners bereichsweise ablegt. Die Aufbereitung des Stadtplans und die Korrekturen werden dann ebenfalls bereichsweise vorgenommen.

**Patentansprüche**

1. Korrekturverfahren für die Koppelortung von Landfahrzeugen, wobei dem Stadtplan in Polygon-Darstellung ein Raster aus Flächenelementen hinterlegt wird, jedem Flächenelement, das von einem Segment des Stadtplans in Polygon-Darstellung geschnitten wird, ein erster logischer Wert zugeordnet wird, jedem Flächenelement, das nicht von einem Segment des Stadtplans in Polygon-Darstellung geschnitten wird, ein zweiter logischer Wert zugeordnet wird und die logischen Werte der Flächenelemente in Form einer Matrix in einem Speicher eines Fahrzeugrechners abgelegt werden, wobei die ermittelten Ortskoordinaten und die Fahrtrichtung des Landfahrzeuges mit in dem Rechner gespeicherten Koordinaten und Richtungen von Straßen verglichen werden und wobei Abweichungen der ermittelten Werte des Landfahrzeuges korrigiert werden, mit folgenden weiteren Schritten :

a) aus den Start-Ortskoordinaten $(X_0, Y_0)$ und dem Startwinkel $(W_0)$ bezüglich einer vorgegebenen Richtung (Nordrichtung) wird vom Rechner das entsprechende Flächenelement (40) ermittelt;

b) bewegt sich das Landfahrzeug, so stellt der Rechner anhand der neuen Ortskoordinaten $(X_1, Y_1)$ und des neuen Winkels $(W_1)$ fest, ob sich das Landfahrzeug noch in dem zuerst genannten Flächenelement (40) befindet;

c) hat der Rechner festgestellt, daß neue Ortskoordinaten $(X_1, Y_1)$ zu einem anderen Flächenelement (43) gehören, dann ermittelt er dessen logischen Wert;

d) hat das betreffende neue Flächenelement (43) den zweiten logischen Wert, so stellt der Rechner aus dem jeweiligen Winkel die Fahrtrichtung des Landfahrzeuges fest und zieht zur Korrektur der gemessenen Ortskoordinaten (X, Y) des Landfahrzeuges sowie des Winkels $(W_1)$ seiner Bahnkurve nur zwei in Fahrtrichtung unmittelbar benachbarte Flächenelemente (62, 63) heran.

2. Korrekturverfahren nach Anspruch 1, dadurch gekennzeichnet, daß der Schritt h gemäß Anspruch 1 folgendermaßen beschaffen ist: Hat das betreffende Flächenelement den zweiten logischen Wert, so liest der Rechner aus dem Stadtplan in Rasterdarstellung die Flächenelemente mit dem ersten logischen Wert aus, um Informationen über den Straßenverlauf, die Kreuzungen, die Einmündungen und die Straßenbreite oder dergleichen zu ermitteln und an Hand dieser Informationen eine Korrektur der Ortskoordinaten des Landfahrzeuges sowie des Winkels seiner Bahnkurve vorzunehmen.

3. Korrekturverfahren nach Anspruch 1, dadurch gekennzeichnet, daß dem Stadtplan in Polygondarstellung (Fig. 2) bereichsweise verschiedene Rastergrößen (90, 91) derart hinterlegt werden, daß die Bereiche, in denen keine Fahrbahnen vorhanden sind, zum Beispiel Wälder, Seen oder dergleichen, eine maximale Rastergröße (90) und daß die Bereiche, in denen eng benachbarte Fahrbahnen vorhanden sind, eine minimale Rastergröße (91) aufweisen.

4. Korrekturverfahren nach Anspruch 1, dadurch gekennzeichnet, daß aus dem normalen Stadtplan unmittelbar die Rasterdarstellung des Stadtplans mittels optisch-elektronischer Vorrichtungen automatisch abgeleitet wird.

5. Korrekturverfahren nach Anspruch 1, dadurch gekennzeichnet, daß die Flächenelemente (30) Rechtecke, Quadrate, Vielecke oder dergleichen sind.

6. Korrekturverfahren nach Anspruch 1, dadurch gekennzeichnet, daß zur Reduzierung des erforderlichen Speicherplatzes zeilenweise nacheinander die Summen der unmittelbar aneinandergrenzenden Flächenelemente gleichen logischen Wertes gebildet werden und daß diese Summen in dem Speicher hintereinander abgelegt werden.

7. Korrekturverfahren nach Anspruch 1, dadurch gekennzeichnet, daß der Stadtplan in mehrere Bereiche aufgeteilt wird und daß die Aufbereitung des Stadtplans und die Korrekturen bereichsweise vorgenommen werden.

8. Korrekturverfahren nach Anspruch 7, dadurch gekennzeichnet, daß sich die Bereiche überlappen.

## Claims

1. Method of correction for dead reckoning navigation of land vehicles, wherein a grid made of surface elements is placed behind the polygonal representation of the town plan, a first logical value is associated with each surface element which is cut by a segment of the polygonal representation of the town plan, a second logical value is associated with each surface element which is not cut by a segment of the polygonal representation of the townplan, and the logical values of the surface elements are filed in the form of a matrix in a store of a motor vehicle computer, wherein the location coordinates ascertained and the direction of travel of the land vehicle are compared with coordinates and directions of roads stored in the computer, and wherein deviations of the ascertained values for the land vehicle are corrected, with the following further steps:

    a) the corresponding surface element (40) is ascertained by the computer from the starting location coordinates $(X_0, Y_0)$ and the starting angle $(W_0)$ relative to a predetermined direction (north direction);
    b) if the land vehicle is moving, the computer ascertains, using the new location coordinates $(X_1, Y_1)$ and the new angle $(W_1)$, whether the land vehicle is still in the first surface element (40) mentioned;
    c) if the computer has established that new location coordinates $(X_1, Y_1)$ belong to another surface element (43), it ascertains the logical value thereof;
    d) if the new surface element (43) in question has the second logical value, the computer estimates the direction of travel of the vehicle using the relevant angle and, to correct the measured location coordinates $(X, Y)$ of the land vehicle and of the angle $(W_1)$ of its trajectory, it uses only two surface elements (62, 63), which are directly adjacent to one another in the direction of travel.

2. Method of correction as in claim 1, characterised in that the step d as in claim 1 is constituted as follows: if the surface element concerned has the second logical value, the computer reads from the grid representation of the town plan the surface elements with the first logical value in order to obtain data on the course of the road, crossroads, junctions and road width or the like and, using this data, to carry out correction of the location coordinates of the land vehicle and of the angle of its trajectory.

3. Method of correction as in claim 1, characterised in that grid sizes, which differ in area, are placed behind the polygonal representation of the town plan in such a way that the areas in which there are no roads, for example woods, lakes or the like, have a maximum grid size (90) and the regions in which there are closely adjacent roads have a minimum grid size (91).

4. Method of correction as in claim 1, characterised in that the grid representation of the town plan is automatically derived from the normal town plan by means of optical-electronic devices.

5. Method of correction as in claim 1, characterised in that the surface elements (3) are rectangles, squares, polygons or the like.

6. Method of correction as in claim 1, characterised in that, in order to reduce the storage space required, the sums of the directly contiguous surface elements having the same logical value are formed in rows in succession, and these sums are filed one after the other in the store.

7. Method of correction as in claim 1, characterised in that the town plan is divided into a plurality of areas and preparation of the town plan and the corrections are carried out area by area.

8. Method of correction as in claim 7, characterised in that the areas overlap.

## Revendications

1. Procédé de correction pour la localisation couplée de véhicules terrestres, en associant au plan de la ville suivant une représentation polygonale, une trame formée d'éléments de surface et à chaque élément de surface qui est traversé par un trait du plan de la ville en représentation polygonale, on associe une première valeur logique et à chaque élément de surface qui n'est pas traversé par un trait du plan urbain en représentation polygonale, on associe une seconde valeur logique et les valeurs logiques des éléments de surface sont inscrites dans une mémoire d'un calculateur embarqué dans le véhicule sous la forme d'une matrice, les coordonnées de position et la direction de déplacement, ainsi déterminées du véhicule sont comparées aux coordonnées et direction des rues mises en mémoire dans le calculateur et on corrige les différences des valeurs fournies par le véhicule en procédant comme suit :

a) à partir des coordonnées de position initiales $(X_0, Y_0)$ et l'angle de départ $(W_0)$ pris par rapport une direction prédéterminée (direction du nord), le calculateur détermine l'élément de surface (40) correspondant,

b) si le véhicule se déplace, le calculateur détermine à l'aide des nouvelles coordonnées de position $(X_1, Y_1)$ et du nouvel angle $(W_1)$ si le véhicule se trouve toujours dans l'élément de surface (40) mentionné ci-dessus,

c) si le calculateur constate que les nouvelles coordonnées $(X_1, Y_1)$ appartiennent à un autre élément de surface (43), il détermine alors la valeur logique de cet élément de surface,

d) si le nouvel élément de surface (43) possède la seconde valeur logique, le calculateur détermine à partir de l'angle respectif, la direction du véhicule et effectue une correction des coordonnées de position mesurées (X, Y) du véhicule ainsi que de l'angle $(W_1)$ de sa trajectoire en utilisant pour cela seulement deux éléments de surface (62, 63) directement voisins selon la direction de déplacement.

2. Procédé de correction selon la revendication 1, caractérisé en ce que si l'élément de surface concerné est à la seconde valeur logique, le calculateur lit dans le plan urbain en représentation tramée, les éléments de surface ayant la première valeur logique pour obtenir des informations concernant le tracé routier, les croisements, les embranchements et la largeur des voies de circulation ou analogues et à l'aide de ces informations il effectue une correction des coordonnées de position du véhicule ainsi que de l'angle de sa trajectoire.

3. Procédé de correction selon la revendication 1, caractérisé en ce qu'au plan urbain en représentation polygonale (figure 2), on associe différentes dimensions de trame (90, 91), par zones, de manière que les zones dans lesquelles il n'y a pas de voies de circulation par exemple les forêts, les lacs ou analogues, on associe la grandeur de trame maximale (90) et aux zones dans lesquelles il y a des voies de circulation très rapprochées, on associe une grandeur de trame minimale (91).

4. Procédé de correction selon la revendication 1, caractérisé en ce qu'à partir du plan urbain normal, on déduit directement la représentation tramée du plan, automatiquement à l'aide de dispositifs opto-électroniques.

5. Procédé de correction selon la revendication 1, caractérisé en ce que les éléments de surface (30) sont des rectangles, des carrés, des polygones ou analogues.

6. Procédé de correction selon la revendication 1, caractérisé en ce que pour réduire les emplacements de mémoire nécessaires, on additionne ligne par ligne, successivement les sommes des éléments de surface directement adjacents et ayant la même valeur logique et on inscrit ces sommes successivement dans la mémoire.

7. Procédé de correction selon la revendication 1, caractérisé en ce qu'on subdivise le plan urbain en plusieurs zones et on effectue la préparation du plan urbain et les corrections par zone.

8. Procédé de correction selon la revendication 7, caractérisé en ce que les zones se chevauchent.

Fig.1

Fig.2

Fig. 3

Fig. 4

Fig. 5

Fig. 6

Fig. 7

Fig. 8

Fig. 9